# EUROPEAN PATENT SPECIFICATION

(11) **EP 3 933 627 B1**
(45) Date of publication and mention of the grant of the patent: **23.08.2023**
(21) Application number: 20183944.6
(22) Date of filing: 03.07.2020
(51) Int. Cl.: G06F 21/34, H04L 9/40

(54) **AUTHENTICATION METHOD**
AUTHENTIFIZIERUNGSVERFAHREN
PROCÉDÉ D'AUTHENTIFICATION

(43) Date of publication of application: 05.01.2022
(73) Proprietor: Fujitsu Finland Oy, 00380 Helsinki (FI)
(72) Inventor: Pekkala, Seppo, 00380 Helsinki (FI); Näveri, Jari, 00380 Helsinki (FI)
(74) Representative: Kolster Oy Ab

(56) References cited:
- US-A- 5 590 199
- US-A1- 2014 101 453
- US-A1- 2014 149 742

## Description

### Technical Field

The exemplary and non-limiting embodiments relate to tokens providing electronic identification.

### Background

The development and wide usage of communication systems have introduced the need for providing a possibility to users and organisations to identify themselves in a secure and trustworthy manner as conventional methods of using identifications is not possible in electronic communication. Certificates which are granted by certified authorities or organisations may be used to identify a used which for signing into a secure network or electronic trusted service or sign or encrypt emails and documents. Also, other methods may be used for identifying users

Typically, in authentication utilising certificates or other methods, some kind of tokens are utilised where. A token such as a smart card may be read by an application using a card reader located in or attached to computer equipment. Tokens, such as smart cards have a limited amount of memory and processing power which may limit their use in modern communication environments.

US 2014/101453 discloses authenticating utilising biometric data to authenticate a user.

### Brief description

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided a method of claim 1.

According to an aspect of the present invention, there is provided an apparatus of claim 6.

### Brief description of drawings

One or more examples of implementations are set forth in more detail in the accompanying drawings and the description below. Other features will be apparent from the description and drawings, and from the claims.
Figure 1A illustrates a simplified example of a token;
Figure 1B illustrates a simplified example of an apparatus of an embodiment;
Figure 2 illustrates an example of an environment;
Figures 3 and 4 are flowcharts illustrating some embodiments and
Figures 5 and 6 are flowcharts illustrating some embodiments.

### Detailed description of some embodiments

As mentioned, authentication of a communicating party in electronic communication is important. There are various ways of realising authentication. One example of an authentication mechanism is certificate-based authentication protocols, which is based on digital certificates that typically include at least a Distinguished Name (DN) and an associated public key. A certificate is typically issued by a Certification Authority (CA). The owner of the certificate further has a private key, which is a pair to the public key, but is kept secret. The CA may verify the identity of the owner and create a certificate comprising the public key of the owner and encrypt it with the private key of the CA. If a party trusts the CA it also may trust that the certificates issued by the CA are valid.

A typical method used in certificates is the use of public/private key pairs. When a public key is included in a certificate, the private key may be used for signing and the public key may be used for verifying the signature. A successful response proves that the signer holds the private key matching the public one in the certificate. Therefore, the signer's identity must be the one claimed in the certificate. Since the public/private key pair is unique and the private part is not known to outsiders, outsiders are not able to calculate the correct response.

Other types of authentication mechanisms include utilising passwords and various biometric data, for example.

Typically, some kind of devices, or tokens or security tokens are utilised in authentication. The devices or tokens may store data needed in authentication. The data maybe certificates, for example. A typical device or token used in connection with authentication is a smart card. However, other types of devices or tokens are also available. In case of certificates, a user having a certificate may have a smart card reader in or attached to the computer system used by the user. A smart card may be inserted to the reader be accessible by the computer. The smart card may comprise the private key of the user. The use of the smart card may be protected by a PIN-code (Personal Identification Number) which prevents unauthorised access.

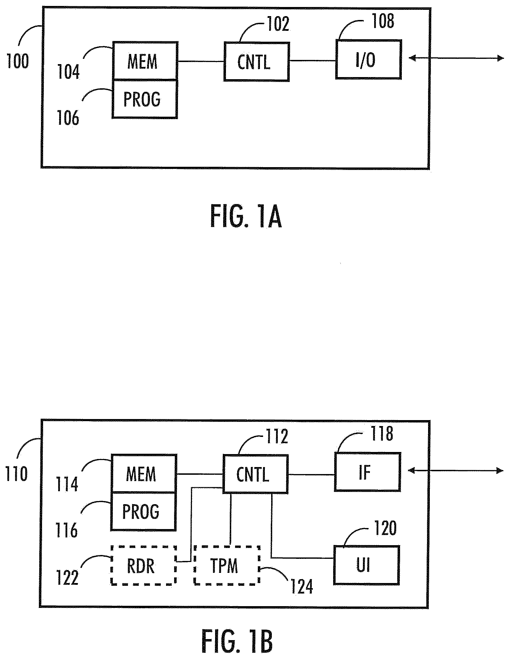

Fig. 1A illustrates a simplified example of hardware realisation of a device 100 which may be a token or a smart card. It should be understood that the device is depicted herein as an example illustrating some embodiments. It is apparent to a person skilled in the art that the device may also comprise other functions and/or structures and not all described functions and structures are required. Although the device has been depicted as one entity, different modules and memory may be implemented in one or more physical or logical entities.

The device 100 or token of the example of Fig.1A includes a control circuitry 102 configured to control at least part of the operation of the apparatus. The control circuitry may be processor or central processing unit. CPU, for example.

The device 100 or token may comprise one or more memories 104 for storing data. Furthermore, the memories may store software or applications 106 executable by the control circuitry 102. The memory may be integrated in the control circuitry. The memories may be Read-Only Memories, ROM, Random-Access Memories, RAM, and Electrically Erasable Programmable Read-Only Memories, EEPROM. Typically, the operating system or runtime environment of the device or token is stored in ROM. Ram is typically used as data storage during computation operations. EEPROM is typically used for storing applications and their persistent associated data. However, the use of memories may vary depending on the environment where the device or token is used.

The control circuitry 102 may be configured to execute one or more applications stored in the memory 104.

The device 100 or token may further comprise an input/output circuitry, I/O, 108 operationally connected to the control circuitry 102. The input/output circuitry may provide either a wired or a wireless connection to another device. The other device may be a card reader of a computing device such as a client device, which is used for actions requiring secure or trusted communications or user authentication. Typically, the client device is a personal computer, a laptop or tabletop computer or other corresponding apparatus. The client device may also be a mobile device such as a tablet or a smart phone (also called UE, user equipment, user terminal, terminal device, etc.). The client device may also be a card reader used in an access control system and located in or near a door, for example. The client device may be capable of communicating with remote servers or computers located in various networks via Internet, or in local networks, for example. The wireless connection may utilise Near Field Communication, NFC, or Radio Frequency Identification, RFID, for example. In an embodiment, the device 100 or token may receive its operating power from the wired or a wireless connection.

Fig. 1B illustrates a simplified example of hardware realisation of an apparatus 110 which may be a client device or a terminal and in which some embodiments may be applied. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities. For example, the apparatus may be realized using cloud computing or distributed computing with several physical entities located in different places but connected with each other.

The apparatus of the example includes a control circuitry 112 configured to control at least part of the operation of the apparatus.

The apparatus may comprise a memory 114 for storing data. Furthermore, the memory may store software or applications 116 executable by the control circuitry 112. The memory may be integrated in the control circuitry.

The control circuitry 112 is configured to execute one or more applications. The applications may be stored in the memory 114.

The apparatus may further comprise user interface 120 operationally connected to the control circuitry 112. A user may communicate with the apparatus using the user interface. The user interface may comprise a keyboard, a keypad, a biometric scanner, a display, a microphone, a speaker, for example.

The apparatus may further comprise one or more interfaces 118 operationally connected to the control circuitry 112. The interfaces may be connected to an antenna or a set of antenna elements (not shown). The interfaces may provide the apparatus a connection to other apparatuses. The interfaces may be various wired or wireless or radio interfaces providing the apparatus a connection to a radio access system via which other apparatuses may be reached. For example, the apparatus may communicate with network servers and applications, for example.

The apparatus may further comprise a token interface 122, such as a smartcard reader or token reader. The token interface is operationally connected to the control circuitry 112. In an embodiment, the token interface provides the token operating power.

In an embodiment, a physical token is not used but instead the apparatus may further comprise a Trusted Platform Module, TPM, circuitry 124 which performs the tasks of a separate physical token. The Trusted Platform Module 124 is a separate circuitry or a computer chip such as a microcontroller that can securely store data used in authentication. The data may comprise passwords, certificates, or cryptographic keys. In an embodiment, the TPM may be integrated with the control circuitry 112 and the memory 114.

In an embodiment, the client device or terminal may be, for example a mobile phone or user terminal comprising a TPM circuit and which needs no physical external token to perform the disclosed embodiments.

In an embodiment, driver software for the token or TPM is stored in the memory 114 and executable by the control circuitry 112. The driver software may enable the terminal or client device 110 to communicate with the token 100 or TPM 124. In an embodiment, the token inserted to or being in contact with the token interface may enable the token to utilise the one or more interfaces 118 for communication with a remote server or storage.

Below, whenever referred to a token, a Trusted Platform Module, TPM, circuitry may be applied a swell, as one skilled in the art is aware.

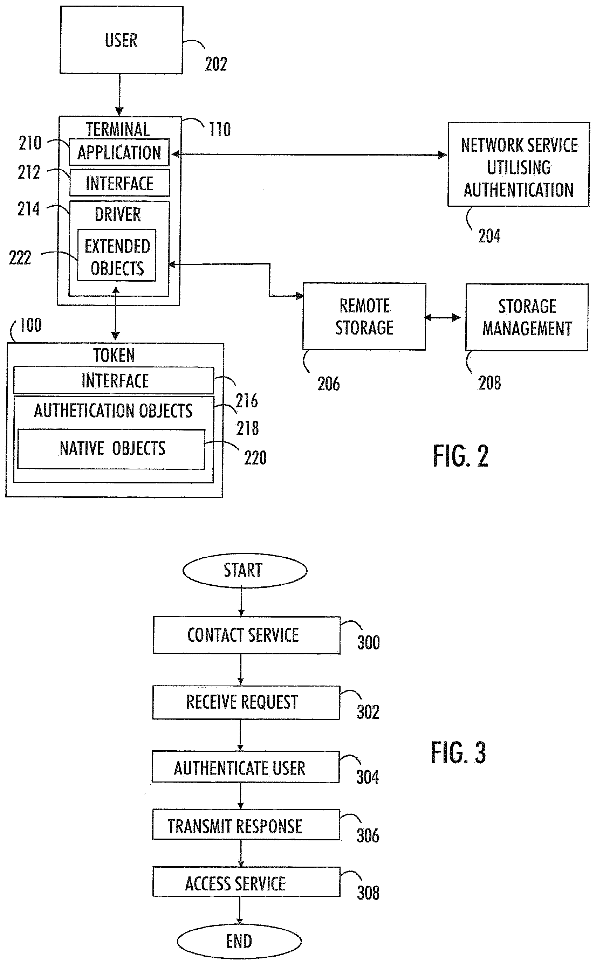

Fig.2 illustrates an example of an environment where some embodiments of the invention may be applied. The simplified example only shows some elements and functional entities, all being logical units, whose implementation may differ from what is shown. Embodiments of the invention are not, however, restricted to the example environment given but a person skilled in the art may apply the solution in other environments without undue burden.

Fig.2 shows a client device or terminal 110 which is utilised by a user 202. The client device or terminal may be a computing device of a type described above. The client device is configured to make a contact with a device 100 or token. For example, the token, such as a smart card, may be installed on a smart card reader located in the client device or connected to the client device. The client device may comprise an application 210 using the smart card. The contact between the client device and the token depends naturally upon the type of the device 100 or token.

Fig.2 further shows a network server or computing device 204 executing an application or service, which requires authentication before it can be accessed or utilized. The client device 110 may have a wired or wireless connection to the server or computing device 204. The connection may be realized with an Internet connection or via a local network, for example.

Fig.2 further shows a remote storage 206 and a storage management utility 208. In an embodiment, the remote storage 206 may be hosted by a remote server accessible via an Internet connection, for example. The storage management utility 208 may be an application running on the same server or on a different server connected to the remote server.

The client device or terminal 110 may execute the application 210 which is configured to contact the network server or computing device 204 executing an application or service. The client device or terminal 110 may execute driver 214 software for the token or TPM. The application communicates with the driver through an interface 212. The interface 212 is a well-defined or well-known interface commonly utilized in the art.

The smart card (or token) 100 comprises a interface 216 software communicating with the driver 214 of the client device or terminal 110. The smart card may further comprise authentication objects 218, such as certificates. In an embodiment, the smart card comprises native objects 220, which are stored and accessible in the memory of the smart card.

Figure 3 is a flowchart illustrating an example useful in understanding the invention. In this example, the client device or terminal 110, controlled by the user 202, is trying to access an application or service executed by the server or computing device 204. The application or service requires authentication. The user has installed the device 100 or token to the client device (or enabled communication between the client device and the device 100 or token. In following, we assume for simplicity that the device 100 or token is a smart card. The steps would be executed in a similar manner also if the device 100 or token is of different type or a TPM is utilised.

Fig.3 illustrates an example of the operation of the client device or terminal 110. The flowchart illustrates the general steps in the operation of accessing the application or service executed by the server or computing device 204.

In step 300, the client device or terminal 110 contacts the application or service executed by the server or computing device 204.

In step 302, the client device or terminal 110 receives a request to authenticate a user to an external service. The client device forwards the request to the smart card 100.

In step 304, the client device or terminal 110 obtains response to the authentication request utilising the smart card.

In step 306, the client device or terminal 110 transmits the response to the external service.

In step 308, the client device or terminal 110 accesses the service.

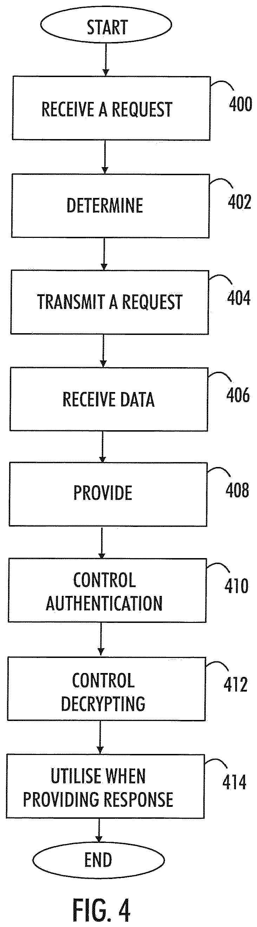

Fig.4 illustrates an example embodiment of the operation of the driver 214 installed and running in the client device or terminal 110. In an embodiment, the operations described in Fig. 4 happen during phase 304 of Fig. 3.

In step 400, the driver 214 is configured to receive a request to authenticate a user to the external service executed by the server or computing device 204. In an embodiment, the request is transmitted through the well-known or well-defined interface 212 by the application 220 running the client device 110.

In step 402, the driver 214 determines that the request requires data not stored in the smart card. The driver may detect that the authentication objects 218, specifically the native objects 220, do not comprise data required by the request. The data may be a certificate, username or password, biometric identification, JavaScript Object Notation, (JSON), Web Token (JWT), access control data, or any data required during authentication.

As the data required is not stored on the card, in step 404, the driver is configured to control transmission of a request regarding the missing data to the remote storage 206. In an embodiment, in the transmission, the communication properties of the client device or terminal may be utilised In an embodiment, the remote server and the contacting address of the server is stored on the smart card and the driver 214 may be configured to fetch the address from the smart card.

In step 406, the driver 214 is configured to control reception of encrypted data from the remote storage 206. The required data, that is received from the remoter server, is encrypted for security. In an embodiment, only the specific smart card can decrypt the data, and, in an embodiment, the data may be decrypted only when the smart card is physically usable by the user.

In step 408, the driver provides to received data to the smart card. The smart card is configured to decrypt the received data. Then the received data may be stored in driver or terminal memory as an extended object 222. Thus, in an embodiment, there may be two kinds of authentication objects, namely native objects 220 stored on the smart card and extended objects 222 stored in the driver or terminal memory. The native objects 220 are stored and accessible all the time. The extended objects 222 are downloaded from a remote server 206 and are accessible only when the smart card is used by an authenticated user.

Thus, in step 410, the driver 214 is configured to control the authentication of the user to the smart card.

In step 412, the driver controls the smart card to decrypt the received data.

In step 414, the driver is configured to utilise the received and decrypted data when providing a response to the authentication request to the application which may then transmit the response to the external service.

The client device or terminal or the application 210 may provide the response generated by the driver and the smart card further to the external service. In an embodiment, the client device or the application 210 is unaware that the smart card did not have the required data for the response, and that the driver 214 communicated with the remote server for the data. The driver could utilise communication resources of the client device when communicating with the remote server. The driver software took care of the communication and the application 210 of the client device was unaware of the communication.

In an example embodiment, all communication with different parties in the examples of FIG. 3 and 4 is performed utilising well-known or well-defined interfaces and protocols known in the art.

In an embodiment, the known interfaces may be extended to utilise new access control methods or utilisation of data that originally was not supported by tokens. The data transfer between the token and the remote server may be encrypted so that the token may decrypt the data at the token only when the user of the token is present and authenticated.

In an embodiment, the driver 214 may request the remote server 206 to perform actions. The actions may be such that the token cannot perform, for example due to limited processing capability or limited memory. The actions may be generating a temporary key and use of the key, certificate revocation list checks, or other checks the token is unable to perform.

The extended data at the remote server may be centrally controlled by the storage management 208. In an embodiment, there may restrictions on what data the driver or token utilised by a given user may access at the server. For example, generating a cryptographic key, and usage of the key may be limited to given users.

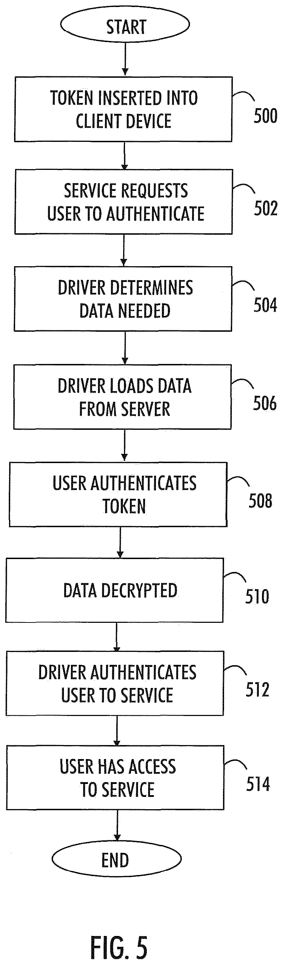

Fig.5 is a flowchart illustrating an embodiment. Fig.5 illustrates an example of a situation where user 202 needs an access to a service 204 which requires authentication, the environment being as described in Fig. 2.

In step 500, the user 202 places the token 100 in contact with a client device 110. For example, a smart card may be inserted into a card reader or a token on top or beside a reader, for example.

In step 502, the user may have initiated an application configured to contact the desired service 204. The service requests the user to authenticate utilising the token 100 before allowing the user to access the service.

In step 504, the driver 214 may determine that the native objects 220 of the token 100 are not capable of authenticating the user. Thus, it determines that data is needed from a remote server or storage 206.

In step 506, the driver 214 loads data from the remote server or remote storage 206. In an embodiment, the data loaded from the server or storage is encrypted so that unauthorised access to data is prohibited.

In step 508, the user is authenticated with the token under control of driver 214. This may be realised with a password, a pin code, thumbprint or any suitable method known in the art.

In step 510, the token is now capable of decrypting the data. In an embodiment, without user authentication in step 508 decrypting the data is not possible.

In step 512, the driver and token utilise the receives data and authenticate the user to the service 204.

In step 514, the user has access to the service 204.

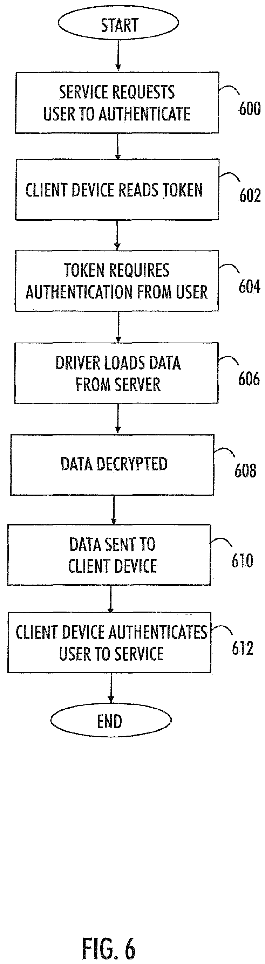

Fig. 6 is another flowchart illustrating an embodiment. Fig.6 illustrates an example of user authentication.

In step 600, the user may have initiated an application in the client device 110, the application configured to contact the desired service 204. The service requests the user to authenticate before allowing the user to access the service.

In step 602, the client device 110 requests data from the token 100.

In step 604, the token under control of driver 214 requests authentication from the user. For example, the authentication may be a pin code, biometric recognition or some other kind of method know in the art.

In step 606, the driver loads data from the remote server or remote storage 206. In an embodiment, the data loaded from the server or storage is encrypted so that unauthorised access to data is prohibited.

In step 608, the data in decrypted, which is possible as the user has been authenticated in step 604.

In step 610, the driver 214 sends the data (extended object loaded form the remoter server or storage) to the client device.

In step 612, the client device 110 authenticates the user to the service 204 utilising the extended object.

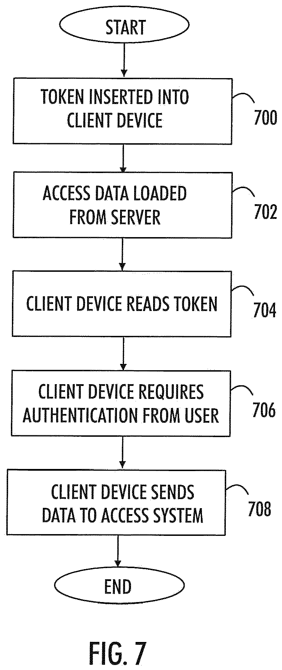

Fig. 7 is another flowchart illustrating an embodiment. Fig.7 illustrates an example of user authentication in connection with access control.

In step 700, the user 202 places the token 100 in contact with a client device 110. For example, a smart card may be inserted into a card reader or a token on top or beside a reader, for example.

In step 702, the driver 214 loads access control data from the remote server or remote storage 206. In an embodiment, the data loaded from the server or storage is encrypted so that unauthorised access to data is prohibited.

In step 704, the client device 110 reads the access control data from the token via driver 214.

In step 706, the client device requests the authentication from the user. For example, the authentication may be a pin code, biometric recognition or some other kind of method know in the art.

In step 708, the client device transmits authentication data to a server performing access control. Referring to Fig.2, the server performing access control may be the server 204.

In an embodiment, where the client device is a simple reader with no other user interface, inserting the token in the client device is interpreted as the user authentication. The client device may indicate successful authentication with a simple manner such as an audio signal or Led diode. When the client device comprises a user interface, such as a keyboard, keypad, or fingerprint scanner the authentication may be performed as described in step 706.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The devices, apparatuses or controllers able to perform the above-described steps may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus or device, are configured to control the apparatus or device to execute the embodiments described above.

The computer program may be in source code form, object code form, or in some intermediate form, and it may be stored in some sort of carrier, which may be any entity or device capable of carrying the program. Such carriers include a non-transitory computer readable medium, record medium, computer memory, read-only memory, and a software distribution package, for example. Depending on the processing power needed, the computer program may be executed in a single electronic digital computer or it may be distributed amongst a number of computers.

The device, apparatus or parts of the device or apparatus may also be implemented as one or more integrated circuits, such as application-specific integrated circuits ASIC, field-programmable gate array FPGA, electronically erasable programmable read-only memory EEPROM. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

## Claims

1. An authentication method in a device, comprising:
receiving (400) a request to authenticate a user to an external service;
determining (402) that the request requires data not stored in a token operationally connected to the device;
controlling transmission (404) of a request regarding the data to a remote storage;
controlling reception (406) of encrypted data from the remote storage;
providing (408) the data to the token;
controlling (410) token to authenticate the user;
controlling (412) token to decrypt the data after the user has been authenticated;
utilising (414) the data when providing a response to the authentication request to the external service.

2. The method of claim 1, wherein the data required by the request comprises data not stored in the token.

3. The method of claim 1 or 2, wherein the data required by the request comprises data processing the token is unable to perform.

4. The method of any preceding claim, wherein the data is a certificate, username or password, biometric identification, JavaScript Object Notation Web Token, access control data, or any data required during authentication.

5. The method of any preceding claim, wherein the data is stored in the device after decrypted by the token.

6. A device comprising:
means (112, 214) for receiving a request to authenticate a user to an external service;
means (112, 214) for determining that the request requires data is not stored in a token operationally connected to the device;
means (112, 214) for transmitting a request regarding the data to a remote server;
means (112, 214) for receiving encrypted data from the remote server;
means (112, 214) for providing the data to the token;
means (112, 214) for controlling token to authenticate the user;
means (112, 214) for controlling token to decrypt the data after the user has been authenticated;
means (112, 214) for utilising the data when providing a response to the authentication request to the external service.

7. The device of claim 6, wherein the means comprise at least one processor and at least one memory including computer program code.

8. The device of any preceding claim 6 to 7, wherein the data is a certificate, username or password, biometric identification, JavaScript Object Notation Web Token, access control data, or any data required during authentication.

9. The device of any preceding claim 6 to 8, wherein the data required by the request comprises data not stored in the device.

10. The device of any preceding claim 6 to 8, wherein the data required by the request comprises data processing the device is unable to perform.

11. A computer program comprising instructions for causing a device to perform at least any of the steps of claims 1 to 5.

## Patentansprüche

1. Authentifizierungsverfahren in einer Vorrichtung, das Folgendes umfasst:
Empfangen (400) einer Anforderung zum Authentifizieren eines Benutzers für einen externen Dienst;
Bestimmen (402), dass die Anforderungen Daten anfordert, die nicht in einem mit der Vorrichtung wirkverbundenen Token gespeichert sind;
Steuern einer Übertragung (404) einer Anforderung bezüglich der Daten zu einem fernen Speicher;
Steuern eines Empfangs (406) von verschlüsselten Daten vom fernen Speicher;
Bereitstellen (408) der Daten für das Token;
Steuern (410) des Tokens zum Authentifizieren des Benutzers;
Steuern (412) des Tokens zum Entschlüsseln der Daten, nachdem der Benutzer authentifiziert wurde;
Verwenden (414) der Daten, wenn eine Antwort auf die Authentifizierungsanforderung für den externen Dienst bereitgestellt wird.

2. Verfahren nach Anspruch 1, wobei die Daten, die von der Anforderung angefordert werden, Daten umfassen, die nicht im Token gespeichert sind.

3. Verfahren nach Anspruch 1 oder 2, wobei die von der Anforderung angeforderten Daten eine Datenverarbeitung umfassen, die vom Token nicht durchgeführt werden kann.

4. Verfahren nach einem der vorhergehenden Ansprüche, wobei die Daten ein Zertifikat, ein Benutzername oder ein Passwort, eine biometrische Identifikation, ein JavaScript Object Notation Web Token, Zugriffssteuerdaten oder andere bei der Authentifizierung erforderliche Daten sind.

5. Verfahren nach einem der vorhergehenden Ansprüche, wobei die Daten in der Vorrichtung gespeichert werden, nachdem sie vom Token entschlüsselt wurden.

6. Vorrichtung, die Folgendes umfasst:
Mittel (112, 214) zum Empfangen einer Anforderung zum Authentifizieren eines Benutzers für einen externen Dienst;
Mittel (112, 214) zum Bestimmen, dass die Anforderungen Daten anfordert, die nicht in einem mit der Vorrichtung wirkverbundenen Token gespeichert sind;
Mittel (112, 214) zum Übertragen einer Anforderung bezüglich der Daten zu einem fernen Server;
Mittel (112, 214) zum Empfangen von verschlüsselten Daten vom fernen Server;
Mittel (112, 214) zum Bereitstellen der Daten für das Token;
Mittel (112, 214) zum Steuern des Tokens zum Authentifizieren des Benutzers;
Mittel (112, 214) zum Steuern des Tokens zum Entschlüsseln der Daten, nachdem der Benutzer authentifiziert wurde;
Mittel (112, 214) zum Verwenden der Daten, wenn eine Antwort auf die Authentifizierungsanforderung für den externen Dienst bereitgestellt wird.

7. Vorrichtung nach Anspruch 6, wobei die Mittel mindestens einen Prozessor und mindestens einen Speicher, der Computerprogrammcode beinhaltet, umfassen.

8. Vorrichtung nach einem der vorhergehenden Ansprüche 6 bis 7, wobei die Daten ein Zertifikat, ein Benutzername oder ein Passwort, eine biometrische Identifikation, ein JavaScript Object Notation Web Token, Zugriffssteuerdaten oder andere bei der Authentifizierung erforderliche Daten sind.

9. Vorrichtung nach einem der vorhergehenden Ansprüche 6 bis 8, wobei die Daten, die von der Anforderung angefordert werden, Daten umfassen, die nicht in der Vorrichtung gespeichert sind.

10. Vorrichtung nach einem der vorhergehenden Ansprüche 6 bis 8, wobei die Daten, die von der Anforderung angefordert werden, eine Datenverarbeitung umfassen, die von der Vorrichtung nicht durchgeführt werden kann.

11. Computerprogramm, das Anweisungen zum Bewirken, dass eine Vorrichtung mindestens einen der Schritte der Ansprüche 1 bis 5 durchführt, umfasst.

## Revendications

1. Procédé d'authentification dans un dispositif, comprenant :
la réception (400) d'une demande pour authentifier un utilisateur auprès d'un service externe ;
la détermination (402) du fait que la demande requiert des données qui ne sont pas stockées dans un jeton connecté de manière opérationnelle au dispositif ;
la commande de la transmission (404) d'une demande concernant les données à un dispositif de stockage distant ;
la commande de la réception (406) de données cryptées du dispositif de stockage distant ;
la fourniture (408) des données au jeton ;
la commande (410) d'un jeton afin d'authentifier l'utilisateur ;
la commande (412) d'un jeton pour décrypter les données après l'authentification de l'utilisateur ;
l'utilisation (414) des données lors de la fourniture d'une réponse à la demande d'authentification au service externe.

2. Procédé selon la revendication 1, dans lequel les données requises par la demande comprennent des données qui ne sont pas stockées dans le jeton.

3. Procédé selon la revendication 1 ou 2, dans lequel les données requises par la demande comprennent un traitement de données que le jeton n'est pas en mesure de réaliser.

4. Procédé selon l'une des revendications précédentes, dans lequel les données sont un certificat, un nom d'utilisateur ou un mot de passe, une identification biométrique, un jeton Web JavaScript Object Notation, des données de commande d'accès, ou toute donnée requise lors de l'authentification.

5. Procédé selon l'une des revendications précédentes, dans lequel les données sont stockées dans le dispositif après avoir été décryptées par le jeton.

6. Dispositif comprenant :
des moyens (112, 214) pour recevoir une demande pour authentifier un utilisateur auprès d'un service externe ;
des moyens (112, 214) pour déterminer que la demande requiert des données qui ne sont pas stockées dans un jeton connecté de manière opérationnelle au dispositif ;
des moyens (112, 214) pour transmettre une demande concernant les données à un serveur distant ;
des moyens (112, 214) pour recevoir des données cryptées du serveur distant ;
des moyens (112, 214) pour fournir les données au jeton ;
des moyens (112, 214) pour commander le jeton afin d'authentifier l'utilisateur ;
des moyens (112, 214) pour commander le jeton pour décrypter les données après l'authentification de l'utilisateur ;
des moyens (112, 214) pour utiliser les données lors de la fourniture d'une réponse à la demande d'authentification au service externe.

7. Dispositif selon la revendication 6, dans lequel les moyens comprennent au moins un processeur et au moins une mémoire comportant un code de programme informatique.

8. Dispositif selon l'une des revendications précédentes 6 et 7, dans lequel les données sont un certificat, un nom d'utilisateur ou un mot de passe, une identification biométrique, un jeton Web JavaScript Object Notation, des données de commande d'accès, ou toute donnée requise lors de l'authentification.

9. Dispositif selon l'une des revendications précédentes 6 à 8, dans lequel les données requises par la demande comprennent des données qui ne sont pas stockées dans le dispositif.

10. Dispositif selon l'une des revendications précédentes 6 à 8, dans lequel les données requises par la demande comprennent un traitement de données que le dispositif n'est pas en mesure de réaliser.

11. Programme informatique comprenant des instructions pour amener un dispositif à réaliser au moins l'une des étapes des revendications 1 à 5.
